(19) Europäisches Patentamt
European Patent Office
Office européen des brevets

(11) **EP 2 455 852 B1**

(12) **EUROPÄISCHE PATENTSCHRIFT**

(45) Veröffentlichungstag und Bekanntmachung des Hinweises auf die Patenterteilung:
**04.11.2015 Patentblatt 2015/45**

(51) Int Cl.:
***G06F 7/72*** *(2006.01)*

(21) Anmeldenummer: **11009104.8**

(22) Anmeldetag: **16.11.2011**

(54) **Verfahren zur Langzahldivision**

Method for long division

Procédé de division à nombres longs

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2010 DE 102010051852**

(43) Veröffentlichungstag der Anmeldung:
**23.05.2012 Patentblatt 2012/21**

(73) Patentinhaber: **Giesecke & Devrient GmbH**
**81677 München (DE)**

(72) Erfinder:
• **Bockes, Markus, Dr.**
**81927 München (DE)**
• **Pulkus, Jürgen, Dr.**
**80469 München (DE)**

(56) Entgegenhaltungen:
**US-A- 5 448 639 US-A- 6 163 790**

• **MONTGOMERY P L: "MODULAR MULTIPLICATION WITHOUT TRIAL DIVISION", MATHEMATICS OF COMPUTATION, AMERICAN MATHEMATICAL SOCIETY, US, Bd. 44, Nr. 170, 1. April 1985 (1985-04-01), Seiten 519-521, XP000747434,**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Ausführen einer kryptographischen Operation auf sicherheitsrelevanten Daten in einem portablen Datenträger sowie einen entsprechend eingerichteten Datenträger.

Im Rahmen einer kryptographischen Operation, z.B. einer Ver- oder Entschlüsselung von Daten, dem Erzeugen einer digitalen Signatur oder einem Verifizieren einer solchen, werden wiederholt grundlegende Operationen verwendet. Diese sind insbesondere eine Langzahlmultiplikation Langzahldivision oder modulare Reduktion, beispielsweise im Rahmen der Berechnungen eines RSA-Verfahrens oder eines DSA- bzw. ECDSA-Signatur-Algorithmus.

Der Ressourcenaufwand zum wiederholten Durchführen einer modularen Multiplikation, wie sie beispielsweise bei der Berechnung eines Wertes der Form $x^d \bmod n$ notwendig ist, konnte entscheidend dadurch vermindert werden, dass mittels des Einsatzes der so genannten Montgomery-Multiplikation eine gemäß dem bis dahin bekannten Verfahren notwendige Langzahldivision ausbleiben kann. Die Montgomery-Multiplikation ist in dem Artikel "Modular Multiplication Without Trial Division" von Peter L. Montgomery, Mathematics of Computation, Vol. 44, No. 170, April 1985, pp. 519-521, anschaulich beschrieben. Um diesen Effekt noch weiter zu steigern, umfassen zahlreiche portable Datenträger, welche zum Ausführen kryptographischer Operationen eingerichtet sind, entsprechende Koprozessoren zum Durchführen einer solchen Montgomery-Multiplikation.

Aufgabe der vorliegenden Erfindung ist es, auch den Ressourcenaufwand zum Durchführen einer Division auf einem portablen Datenträger zu vermindern. Insbesondere stellt sich die vorliegende Erfindung die Aufgabe, den ganzzahligen Quotienten einer Division a/b eines Dividenden a durch einen Divisor b effizient zu bestimmen.

Diese Aufgabe wird durch ein Verfahren und einen Datenträger mit den Merkmalen der unabhängigen Ansprüche gelöst. Vorteilhafte Ausgestaltungen und Weiterbildungen sind in den abhängigen Ansprüchen angegeben.

Eine grundlegende Idee der Erfindung besteht darin, ein Divisionsverfahren derart anzupassen, dass einzelne Verfahrensschritte als Montgomery-Multiplikation, und damit effizienter, eventuell zusätzlich mittels spezifischer Hardware, durchgeführt werden können.

Ein erfindungsgemäßes Verfahren in einem portablen Datenträger zum Ausführen einer kryptographischen Operation auf sicherheitsrelevanten Daten umfasst einen Schritt des Bestimmens des ganzzahligen Quotienten eines Dividenden durch einen Divisor. Dabei wird der Quotient mittels einer Divisionseinrichtung des Datenträgers bestimmt. Der Quotient wird dadurch bestimmt, dass zuerst der Dividend um seinen Rest modulo des Divisors vermindert wird. Dann wird eine Montgomery-Multiplikation bezüglich eines vorgegebenen Modulus durchgeführt. Die Montgomery-Multiplikation wird dabei mittels einer Multiplikationseinrichtung des Datenträgers durchgeführt und empfängt einen von dem verminderten Dividenden abgeleiteten Wert als einen Eingabewert.

Dementsprechend umfasst ein erfindungsgemäßer portabler Datenträger zum Ausführen einer kryptographischen Operation auf sicherheitsrelevanten Daten einen Prozessor, einen Speicher, eine Multiplikationseinrichtung zum Durchführen einer Montgomery-Multiplikation sowie eine Divisionseinrichtung. Diese ist eingerichtet, im Rahmen der kryptographischen Operation den Quotienten eines Dividenden durch einen Divisor zu bestimmen. Zur Bestimmung des Quotienten ist die Divisionseinrichtung eingerichtet, den Dividenden um seinen Rest modulo des Divisors zu vermindern. Weiter ist die Divisionseinrichtung eingerichtet, eine Montgomery-Multiplikation bezüglich eines vorgegebenen Modulus mittels der Multiplikationseinrichtung durchzuführen. Die Multiplikationseinrichtung ihrerseits ist eingerichtet, zum Durchführen der Montgomery-Multiplikation einen von dem verminderten Dividenden abgeleiteten Wert als einen Eingabewert zu empfangen.

Damit wird es möglich, auch eine Division unter Umgehung einer laufzeitintensiven gewöhnlichen Langzahldivision effizient durchzuführen. Wie nachfolgend detailliert beschrieben, kann zusätzlich zur Bestimmung des Quotienten auch die Bestimmung des im ersten Schritt des erfindungsgemäßen Verfahrens als Eingabewert verwendeten Restes des Dividenden modulo des Divisors unter Anwendung einer Reihe von Montgomery-Multiplikationen ohne eine Langzahldivision effizient bestimmt werden. D.h. bereits unabhängig von der verwendeten Hardware werden Vorteile erfindungsgemäß dadurch erzielt, dass die Anzahl durchzuführender Rechenschritte vermindert werden kann. Eine nachstehend genau beschriebene, geeignete Zerlegung des Dividenden lässt also erfindungsgemäß auch die Verwendung einer Multiplikationseinrichtung in dem Datenträger zu, welche bezüglich der Ein- und Ausgabewerte beschränkt ist. Lediglich der Divisor ist gemäß dem vorliegenden Verfahren an eine solche Beschränkung direkt gebunden. Der Dividend ist zwar nicht beliebig groß wählbar, kann aber die Beschränkungen der Multiplikationseinrichtung innerhalb bestimmter Grenzen übersteigen.

Vorzugsweise umfasst die Multiplikationseinrichtung des Datenträgers einen Koprozessor, welcher eingerichtet ist, eine Montgomery-Multiplikation durchzuführen. Damit kann das erfindungsgemäße Verfahren dadurch zusätzlich beschleunigt werden, dass die Schritte der Montgomery-Multiplikation mittels dafür optimierter Hardware durchgeführt werden können. Der auf diese Weise erreichbare doppelte Effekt der Reduzierung durchzuführender Rechenoperationen kombiniert mit der besonders effizienten Durchführung eines Großteils dieser Operationen mittels dafür optimierter Hardware macht das vorliegende Verfahren besonders vorteilhaft.

Die Multiplikationseinrichtung des Datenträgers kann eingerichtet sein, eine Montgomery-Multiplikation mit unterschiedlichen Ein- und Ausgabewerten durchzuführen, d.h. insbesondere, dass die Größe von Ein- und Ausgabewerten bauartbedingt eingeschränkt sein können. Gängige Ein- und Ausgabewerte liegen im Bereich von -M bis M-1 oder im Bereich von 0 bis 2*M-1 oder im Bereich von 0 bis R-1. Dabei wird mit M der Modulus bezeichnet, bezüglich dessen die Montgomery-Multiplikation durchgeführt wird, und mit R die zum Modulus M teilerfremde Zahl, die M bezüglich der Montgomery-Multiplikation zugeordnet ist. Es gilt stets, dass M kleiner ist als R. Im Folgenden wird aus Gründen der einfacheren Darstellung stets davon ausgegangen, dass die Ein- und Ausgabewerte einer Montgomery-Multiplikation nicht negativ und kleiner als der Modulus M oder kleiner als die zu M teilerfremde Zahl R sind.

Der vorgegebene Modulus, bezüglich dessen die Montgomery-Multiplikation in dem erfindungsgemäßen Verfahren durchgeführt wird, wird dadurch gebildet, dass der Divisor von einer vorgegebenen Zweier-Potenz subtrahiert wird. D.h. der Modulus hat die Form $2^x$ -b mit geeignetem x. Diese Zweier-Potenz wird beispielsweise durch den der Montgomery-Multiplikation zugeordneten R-Wert, der in der Regel als Zweier-Potenz $2^\delta$ gegeben ist, d.h. $x=\delta$, oder durch Vorgaben des Koprozessors vorgegeben. Eine solche Vorgabe des Koprozessors kann beispielsweise eine obere Schranke $2^\beta$ für die Größe von durch den Koprozessor verarbeitbaren Werte sein, wobei $\beta \le \delta$ gilt. Die Wahl des Modulus in dieser Form $2^x$ - b hat, wie nachfolgend detailliert beschrieben, den Effekt, dass das Reziproke der Zweier-Potenz modulo dieses Modulus gleich dem Reziproken des Divisors modulo dieses Modulus ist. Diese Gleichheit, $2^{-x} \equiv b^{-1} \bmod 2^x$ -b, erlaubt die Bestimmung des Quotienten mittels der Montgomery-Multiplikation.

Gemäß einer ersten, einfachen Ausführungsform des erfindungsgemäßen Verfahrens werden die Größe des Dividenden und die Größe des Divisors durch die Größe der Zweier-Potenz, welche zur Bestimmung des Modulus herangezogen wird, beschränkt. Es ist also beispielsweise a, b < $2^\beta$ oder a, b < R einzuhalten. Der von dem verminderten Dividenden abgeleitete Wert wird dabei durch den verminderten Dividenden selbst vorgegeben. Wird der Dividend mit a bezeichnet, der Divisor mit b, so hat der verminderte Dividend die Form a - r, wobei r = a mod b gilt.

Gemäß einer zweiten Ausführungsform kann der Dividend größer sein als in der ersten Ausführungsform. Dieser wird hier lediglich durch die Größe des Produktes der Zweier-Potenz mit dem Divisor beschränkt, also beispielsweise a < $2^\beta$ *b oder a < R*b. Allerdings ist es dann notwendig, dass der Divisor im Vergleich zur ersten Ausführungsform lediglich halb so groß sein darf, d.h. durch die Hälfte der Größe der Zweier-Potenz beschränkt wird. Es gilt dann beispielsweise b < $2^{\beta-1}$ oder b < R/2. Gemäß der zweiten Ausführungsform wird der von dem verminderten Dividenden abgeleitete Wert durch den Rest des verminderten Dividenden modulo der Zweier-Potenz vorgegeben. D.h. der Dividend wird beispielsweise in der Form a = $a_1$ * $2^\beta$ + $a_0$ dargestellt mit a1 = a div $2^\beta$ und $a_0$ = a mod $2^\beta$. Anstelle von $2^\beta$ kann auch der Wert R verwendet werden.

In einem weiteren Schritt wird gemäß der zweiten Ausführungsform das Ergebnis der Montgomery-Multiplikation zu einem Hilfsquotienten addiert und modulo dem Modulus reduziert. Der Hilfsquotient wird dabei durch Division des verminderten Dividenden durch die Zweier-Potenz bestimmt, ist also beispielsweise durch den vorstehend definierten Wert $a_1$ gegeben.

Schließlich wird, falls das Ergebnis der modularen Addition nicht die gleiche Parität aufweist wie der verminderte Dividend, der Modulus zu dem Ergebnis der modularen Addition addiert.

Beide Verfahren, d.h. sowohl das Verfahren nach der ersten Ausführungsform als auch dasjenige nach der zweiten Ausführungsform, können sowohl unter Verwendung einer Multiplikationseinrichtung durchgeführt werden, deren Ein- und Ausgabewerte durch die Größe des Modulus beschränkt werden, also auch unter Verwendung einer solchen Multiplikationseinrichtung, deren Ein- und Ausgabewerte lediglich durch den der Montgomery-Multiplikation zugeordneten R-Wert beschränkt werden. Im ersten Fall, d.h. falls die Ein- und Ausgabewerte der Montgomery-Multiplikation durch den Modulus beschränkt sind, empfängt die Montgomery-Multiplikation einen Ausgleichsfaktor als zweiten Eingabewert. Dieser wird eingesetzt, um die Vorgaben der entsprechenden Multiplikationseinrichtung, z.B. eines entsprechenden Koprozessors, hinsichtlich der zulässigen Größe von Ein- und Ausgabewerten einhalten zu können. Ein solcher Ausgleichsfaktor wird in der Regel abhängig von dem R-Wert, z.B. R = $2^\delta$, und der Vorgabe der Multiplikationseinrichtung, gegeben beispielsweise durch $2^\beta$, bestimmt, vorzugsweise in der Form m' := $2^{\delta-\beta}$ mod $2^\beta$ -b.

Ein weiteres Verfahren gemäß einer dritten Ausführungsform ermöglicht die Bestimmung eines Quotienten einer Division eines Dividenden durch einen Divisor für einen im Vergleich zur ersten oder zweiten Ausführungsform nochmals vergrößerten Dividenden. Mittels dieses Verfahrens kann die Berechnung des Quotienten auf die zweite Ausführungsform zurückgeführt werden, d.h. die Ausgabe dieses Verfahrens gemäß der dritten Ausführungsform kann als Eingabe für das Verfahren gemäß der zweiten Ausführungsform verwendet werden. Das Verfahren gemäß der ersten oder der zweiten Ausführungsform sowie ein angedeutetes Verfahren zur effizienten Bestimmung des Restes eines Dividenden modulo eines Divisors werden hier als Unterroutinen verwendet.

D.h. auch das Verfahren in einem portablen Datenträger zum Ausführen einer kryptographischen Operation auf sicherheitsrelevanten Daten gemäß der dritten Ausführungsform umfasst einen Schritt zum Bestimmen des Quotienten eines Dividenden durch einen Divisor. Die Divisionseinrichtung des Datenträgers führt dabei insbesondere folgende Schritte durch:

Es wird ein Hilfsquotient einer Division eines von dem Dividenden abgeleiteten Wertes durch den Divisor bestimmt, beispielsweise mittels eines Verfahrens gemäß der ersten oder der zweiten Ausführungsform des erfindungsgemäßen Verfahrens. Wird der Hilfsquotient mit $q_1$ bezeichnet und der von dem Dividenden abgeleitete Wert mit $a_1$, so gilt also $q_1 = a_1$ div b. Der von dem Dividenden abgeleitete Wert, $a_1$, wird dabei vorzugsweise als Quotient des Dividenden durch eine vorgegebene Zweier-Potenz gebildet, also beispielsweise in der Form $a_1 = a$ div $2^\beta$.

Danach wird ein Hilfsdividend, beispielsweise als a' bezeichnet, durch Subtraktion eines Produkts eines von dem Hilfsquotienten abgeleiteten Werts, der mit c bezeichnet werden soll, mit dem Divisor von dem Dividenden bestimmt, d.h. es gilt a' = a - c*b. Der von dem Hilfsquotienten abgeleitete Wert, c, wird vorzugsweise als Produkt des Hilfsquotienten mit der vorgegebenen Zweier-Potenz gebildet, d.h. es gilt $c = 2^\beta * q1$. Für den Hilfsdividenden, a', gilt, dass er modulo des Divisors den gleichen Rest aufweist wie der ursprüngliche Dividend, d.h. es gilt $a \equiv a'$ mod b, a div b = c + (a' div b) und $a' < 2^\beta * b$.

Im Rahmen dieses weiteren Verfahrens durchzuführende Montgomery-Multiplikationen werden sämtlich von der Multiplikationseinrichtung des Datenträgers durchgeführt.

Ausgehend von den in den vorstehend beschriebenen Schritten bestimmten Zwischenwerten kann der Quotient der Division des Dividenden durch den Divisor, also ein Wert q mit q = a div b, wie folgt bestimmt werden:

Es wird ein zweiter Hilfsquotient, beispielsweise mit $q_2$ bezeichnet, einer Division des Hilfsdividenden, a', durch den Divisor, b, bestimmt, d.h. $q_2 = a'$ div b. Dies kann beispielsweise wieder mittels eines Verfahrens nach der ersten oder zweiten Ausführungsform erfolgen.

Schließlich wird der Quotient, q, der Division des Dividenden durch den Divisor, durch Addition des von dem Hilfsquotienten abgeleiteten Werts zu dem zweiten Hilfsquotienten bestimmt, d.h. es gilt $q = c + q_2$.

Wie erwähnt, können mittels dieses weiteren Verfahrens größere Dividenden verarbeitet werden. Die Größe des Dividenden ist hier lediglich durch die Größe des Quadrats der vorgegebenen Zweier-Potenz beschränkt, d.h. es gilt $a < 2^{2\beta}$ oder $a < R^2$. Auch der Divisor wird lediglich wie in der ersten Ausführungsform beschränkt, nämlich durch die Größe der vorgegebenen Zweier-Potenz, d.h. $b < 2^{\beta-1}$ oder b < R/2.

Als erfindungsgemäße portable Datenträger kommen insbesondere Chipkarten, sichere Speicherkarten und dergleichen in Frage.

Die vorliegende Erfindung wird im Folgenden mit Bezug auf die beiliegenden Zeichnungen beispielhaft beschrieben. Darin zeigen:

Figur 1 eine bevorzugte Ausführungsform eines erfindungsgemäßen Datenträgers und

Figur 2 Schritte einer ersten bevorzugten Ausführungsform eines erfindungsgemäßen Verfahrens.

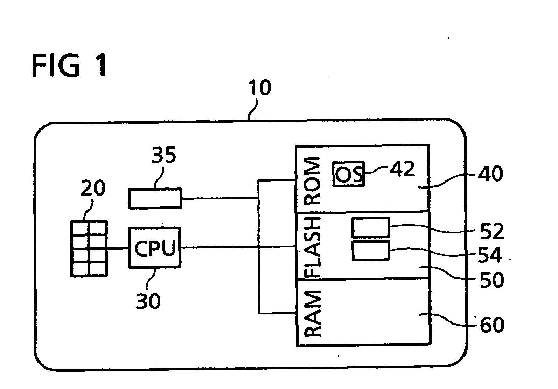

Mit Bezug auf Fig. 1 umfasst ein Datenträger 10, der hier als Chipkarte dargestellt ist, eine Datenkommunikationsschnittstelle 20, einen Prozessor 30, einen Koprozessor 35 sowie verschiedene Speicher 40, 50 und 60. Der Datenträger 10 kann auch in anderer Bauform vorliegen.

Als Datenkommunikationsschnittstelle 20 umfasst der Datenträger 10 ein Kontaktfeld 20 zur kontaktbehafteten Datenkommunikation. Alternativ oder zusätzlich kann eine Antennenspule (nicht gezeigt) zur kontaktlosen Datenkommunikation vorgesehen sein.

Der nicht flüchtige, nicht wiederbeschreibbare ROM-Speicher 40 umfasst ein Betriebssystem (OS) 42 des Datenträgers 10, welches den Datenträger 10 steuert. Zumindest Teile des Betriebssystems 42 können auch in dem nicht flüchtigen, wiederbeschreibbaren Speicher 50 gespeichert sein. Dieser kann beispielsweise als FLASH-Speicher vorliegen.

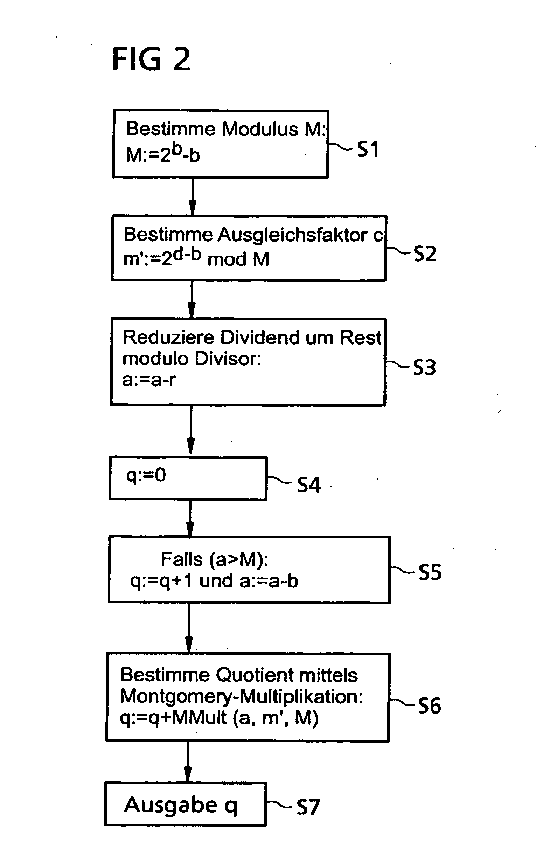

Der Speicher 50 umfasst eine Kryptographieeinrichtung 52, mittels welcher kryptographische Operationen, beispielsweise ein RSA-Verfahren, berechnet werden können. Weiter umfasst der Speicher 50 eine Divisionseinrichtung 54. Diese ist eingerichtet, im Rahmen einer durch die Kryptographieeinrichtung 54 berechneten Operation einen Rest einer Division eines Dividenden modulo eines Divisors zu bestimmen. Die Divisionseinrichtung 54 ist weiter eingerichtet, auch einen Quotienten einer Division eines Dividenden durch einen Divisor zu bestimmen. Die Divisionseinrichtung 54 kann auch Teil der Kryptographieeinrichtung 52 sein. Die Funktionsweise der Divisionseinrichtung 54 wird nachfolgend, insbesondere mit Bezug auf Fig. 2, genauer beschrieben. Der Speicher 50 kann weitere Applikationen und Daten enthalten, beispielsweise geheime Schlüssel oder Anteile davon.

Der Koprozessor 35 übernimmt die Rolle einer Multiplikationseinrichtung 35. Er ist eingerichtet, eine Montgomery-Multiplikation durchzuführen. Im Wesentlichen wird die Multiplikationseinrichtung 35 von der Kryptographieeinrichtung 52 und der Divisionseinrichtung 54 zum Durchführen der Montgomery-Multiplikation im Rahmen einer Berechnung einer kryptographischen Operation herangezogen werden. Alternativ kann eine entsprechende Multiplikationseinrichtung 35 auch als Softwareeinrichtung in einem der Speicher 40, 50 bereitgestellt werden.

Der flüchtige, wiederbeschreibbare RAM-Speicher 60 dient dem Datenträger 10 als Arbeitsspeicher.

Bevor die Funktionsweise der Divisionseinrichtung 54 genauer beschrieben wird, werden einige den Gesamtzusammenhang beschreibende Tatsachen vorangestellt.

Im Folgenden sei ein Dividend stets mit a bezeichnet, ein ungerader Divisor mit b, der Rest des Dividenden a modulo des Divisors b mit r, d.h. $r = a \bmod b$, und der Quotient von a durch b mit q, d.h. $q = a \operatorname{div} b$. Insgesamt gilt die Gleichung $a = q*b + r$, wobei stets $0 \leq r < b$ erfüllt ist. Es versteht sich, dass alle Werte a, b, r, q sowie alle im Folgenden auftretenden Werte ganze Zahlen sind.

Eine Montgomery-Multiplikation mit Eingabewerten x und y bezüglich einem Modulus M wird mit MMult(x, y, M) bezeichnet und berechnet sich wie folgt: $\mathrm{MMult}(x, y, M) := x*y*R^{-1} \bmod M$.

Dabei ist stets M ungerade, kleiner als R und relativ prim zu R, d.h. R und M haben den Wert 1 als größten gemeinsamen Teiler. Der Wert $R^{-1}$ und der im folgende genannte der Wert M' definieren sich bei gegebenem M und R wegen der Teilbarkeitsbedingung über die Gleichung $R* R^{-1} - M*M' = 1$.

In der Regel ist vorauszusetzen, dass die Eingabewerte x und y kleiner sind als der Modulus M. Prinzipiell aber kann die Montgomery-Multiplikation auch so modifiziert werden, dass die Eingabewerte größer als der Modulus M, aber immer noch kleiner als der Wert R sind. Dann erhält man als Ausgabe der Montgomery-Multiplikation allerdings lediglich einen Wert $C := \mathrm{MMult}(x, y, M) < R$, für den gilt: $C \equiv x*y*R^{-1} \bmod M$.

Die klassische Montgomery-Multiplikation wird, wie in dem oben angegebenen Artikel vom Montgomery beschrieben, wie folgt berechnet: Unter Eingabe der Werte x und y, die beide kleiner als M sind, wird in einem ersten Schritt ein Zwischenwert K vermöge der Vorschrift $K := x*y*M' \bmod R$ gebildet ($M' = -M^{-1} \bmod R$). In der Regel ist R als Zweierpotenz, $R = 2^{\delta}$, gegeben, so dass eine Berechnung modulo R datenträgerintern lediglich einer Shift-Operation entspricht und einfach auszuführen ist. In einem zweiten Schritt wird ein Wert W gebildet, der sich berechnet aus der Vorschrift $W := (x*y + K*M)/R$. Auch die Division durch R ist einfach durchzuführen, wenn R eine Zweierpotenz ist. Es kann leicht gezeigt werden, dass diese Division stets ohne Rest möglich ist. Wird nun $C := W$ gesetzt, und falls $C \geq M$ gilt, noch $C := C - M$ gebildet, so lässt sich zeigen, dass der Wert C dem Ausgabewert der Montgomery-Multiplikation entspricht.

Beim modifizierten Montgomery-Verfahren werden für x und y, die kleiner als R sind, ebenso die Werte $K := x*y*M' \bmod R$ und $W := (x*y + K*M)/R$ gebildet. Wird nun $C := W$ gesetzt, und falls $C \geq R$ gilt, noch $C := C - M$ gebildet, so lässt sich zeigen, dass C kleiner als R und $C \equiv x*y*R^{-1} \bmod M$ ist. Im Spezialfall $y = 1$ folgt sogar $C \leq M$.

Die Tatsache, dass der Modulus stets ungerade sein muss, stellt indes keine wesentliche Einschränkung dar. Sollte der Divisor b als Modulus dienen, so ist zu beachten, dass für $b = 2^t * b_1$, $a = 2^t * a_1 + a_0$ mit $0 \leq a < 2^t$ gilt:

$a \bmod b = 2^t * (a_1 \bmod b_1) + a_0$ und $a \operatorname{div} b = a_1 \operatorname{div} b_1$. D.h. es kann der Einfachheit halber stets angenommen werden, dass b ungerade ist.

Konkrete Implementierungen der Montgomery-Multiplikation verwenden zum Teil von oben Angegebenem abweichende Ein- und Ausgabewerte. Beispielsweise können Ein- und Ausgabewerte auch im Bereich -M bis M-1 liegen oder die Ausgabe kann im Bereich 0 bis 2*M-1 liegen. In beiden Fällen kann mit einer bedingten Addition bzw. Subtraktion des Modulus eine Situation herbeigeführt werden, die der vorstehend beschriebenen entspricht.

In der vorliegenden Erfindung wird davon ausgegangen, dass die Multiplikationseinrichtung 35, welche eingerichtet ist, die Montgomery-Multiplikation durchzuführen, bereitsteht, beispielsweise als Software-Modul oder als Koprozessor. Im Fall des Koprozessors besitze dieser eine Koprozessorlänge $\beta$, d.h. er kann Werte der Größe $< 2^{\beta}$ aufnehmen. In vielen Fällen wird für die Montgomery-Multiplikation der R-Wert $R = 2^{\delta}$ mit $\delta = \beta$ verwendet. In anderen Fällen gilt $\delta > \beta$.

In den nachstehend beschriebenen Verfahren zur Bestimmung des Restes $a \bmod b$ wird gelegentlich als ein Eingabewert einer Montgomery-Multiplikation ein geeigneter Ausgleichsfaktor m benötigt. Dieser kann beispielsweise die Form $m1 = R^2 \bmod b$ haben. Ein solcher Wert kann auf verschiede, nachfolgend kurz skizzierte Weisen, bestimmt werden.

Falls in dem Datenträger 10 eine schnelle Langzahlmultiplikation bereitsteht, so kann mit Hilfe einer diskreten Newton-Iteration der Wert $R^2 \operatorname{div} b$ und hieraus m1 berechnet werden. Der Wert $R^2 \operatorname{div} b$ dient beispielsweise in einem Verfahren gemäß der Barret-Reduktion, mittels dessen ebenfalls ein modularer Rest berechenbar ist, als Eingabewert.

Alternativ kann zuerst ein Wert $2*R \bmod b$ oder $2^t * R \bmod b$ berechnet werden (für ein kleines, geeignetes t) und ausgehend hiervon, mittels einiger Montgomery-Multiplikationen und eines Exponentiationsverfahrens, der Wert $m1 = 2^{\delta} *R \bmod b$. Zum Berechnen des Wertes $2^t * R \bmod b$ kann das folgende Verfahren herangezogen werden: Als Eingabewert dient die Bitlänge L des Divisors b, d.h. es gilt $2^{L-1} < b < 2^L \leq 2^{\delta} = R$. Es wird $c := 2^L - b$ gesetzt und für jedes i=1, ..., t+ $\delta$ -L die Schleife $c := c+c \bmod b$ durchgeführt. Dieses Verfahren bietet sich an, wenn der Wert t+ $\delta$ -L klein ist. Falls in dem Datenträger 10 keine modulare Addition zur Verfügung steht, so ist die Operation $c := c+c \bmod b$ zu ersetzen durch die Folge von Vorschriften: $c := c+c$; falls $c \geq b$, setze $c := c - b$.

Falls b eine geheime Zahl ist, beispielsweise ein Anteil der sicherheitsrelevanten Daten, auf denen die kryptographische Operation durchgeführt wird, so muss die Implementierung der Abfrage "$c \geq b$" gegen Seitenkanalangriffe

abgesichert werden. Dies gilt auch für andere durch den Prozessor oder, falls vorhanden, den Koprozessor ausgeführte Operationen auf jeglichen Anteilen der sicherheitsrelevanten Daten oder davon abgeleiteten Werten oder Zwischenergebnissen, ohne dass dies im Folgenden stets erneut angegeben wird.

Die nachfolgend im Detail beschriebenen Verfahren zur Bestimmung des Quotienten einer. Division eines Dividenden durch einen Divisor benötigen als Eingabewert den Rest des Dividenden modulo des Divisors. Auch ein solcher Rest kann unter Anwendung der Montgomery-Multiplikation effizient bestimmt werden, wie dies im Folgenden zuerst beschrieben wird, bevor die Bestimmung des Quotienten ausführlich dargestellt wird.

Es werden verschiedene Ausführungsformen eines Verfahrens zum Bestimmen eines Restes r eines Dividenden a modulo eines Divisors b dargestellt. Die Divisionseinrichtung 54 ist dabei jeweils eingerichtet, eines oder mehrere dieser Verfahren auszuführen. Das gleiche gilt für die beschriebenen und noch folgenden Hilfsverfahren, beispielsweise zum effizienten Bestimmen geeigneter Ausgleichsfaktoren m und dergleichen. Vorzugsweise verfügt der. Datenträger 10 über eine Einrichtung zum Durchführen einer modularen Addition/Subtraktion.

In den ersten beiden Ausführungsformen zur Bestimmung des Restes wird eine Montgomery-Multiplikation verwendet, deren Ein- und Ausgabewerte durch den Modulus M beschränkt sind. In der dritten Ausführungsform kommt eine Montgomery-Multiplikation zum Einsatz, deren Ein- und Ausgabewerte größer sein können und nur durch den Wert R beschränkt sind.

Das Verfahren gemäß der ersten Ausführungsform zur Bestimmung des Restes erhält als Eingabe einen ungeraden Divisor b. Dieser kann von dem Koprozessor 35 aufgenommen werden, d.h. es gilt $b < 2^\beta \le 2^\delta = R$ mit $2^N < b$. Dabei ist N eine geeignet gewählte ganze Zahl, beispielsweise das größtmöglich Vielfache von 8,16 oder 32, welches $2^N < b$ erfüllt.

Als weitere Eingabe dient der Dividend a. Dieser wird in einem ersten Schritt in der folgenden Form zerlegt: $a = \sum i=0,..., n\ a_i*(2^N)^i, 0 \le a_i < 2^N$.

Die Zerlegung des Dividenden a in eine Summe erfolgt vorzugsweise in der Art, dass die Anzahl der Summanden der Summe der Anzahl der zur Bestimmung des Restes benötigten, nachfolgend detailliert beschriebenen Iterationen entspricht. Jeder Summand der Summe ist in der Regel aus einem Produkt zusammengesetzt. Dieses Produkt umfasst den der Iteration zugeordneten Koeffizienten $a_i$ von a sowie eine der Iteration zugeordnete Zweier-Potenz, hier $(2^N)^i$. Diese Zweier-Potenz ergibt sich aus einer iterationsunabhängigen Grund-Zweier-Potenz, hier $2^N$, welche iterationsabhängig nochmals potenziert wird, hier hoch i.

Schließlich erhält das Verfahren noch den Ausgleichsfaktor $m_1 = R^2 \bmod b$ als Eingabewert. Als Ausgabewert gibt das Verfahren den Rest $r = a \bmod b$ aus.

In einem zweiten Schritt wird ein angepasster Ausgleichsfaktor m aus dem Ausgleichsfaktor m1 bestimmt: $m := MMult(m_1, 2^N, b) = 2^N *R \bmod b$. Alternativ kann statt m1 auch direkt m als Eingabewert verwendet worden, so dass dieser Schritt innerhalb des Verfahrens entfällt.

Der Rest r wird nun iterativ bestimmt. In jeder Iteration wird eine Montgomery-Multiplikation mit dem Divisor b als Modulus und eine additive Verknüpfung eines Ausgabewerts der Montgomery-Multiplikation mit einem von dem Dividenden a abgeleiteten, der jeweiligen Iteration zugeordneten Koeffizienten $a_i$ durchgeführt. Die Montgomery-Multiplikation einer nachfolgenden Iteration empfängt dabei ein Ergebnis einer vorhergehenden Iteration als Eingabewert. Jede der Montgomery-Multiplikationen wird mittels der Multiplikationseinrichtung 35, vorzugsweise mittels eines entsprechenden Koprozessors 35, durchgeführt.

Im Einzelnen werden diese Schritte gemäß der ersten Ausführungsform wie folgt ausgeführt:

Der Rest wird initialisiert, gemäß der ersten Ausführungsform vermöge der Vorschrift r := an.

Schließlich erfolgt die eigentliche iterative Berechnung von r. Jede Iteration umfasst zwei Teilschritte: Zum einen eine Montgomery-Multiplikation mit dem Divisor b als Modulus, wobei die Montgomery-Multiplikation als Eingabewerte den aktuellen Rest r sowie den Ausgleichsfaktor m empfängt und als Ausgabewert den aktualisierten Rest r ausgibt: $r := MMult(r, m, b)$. Zum anderen eine additive Verknüpfung des Restes r mit dem der Iteration zugeordneten Koeffizienten $a_i$ sowie ein modulares Reduzieren des entsprechenden Ergebnisses modulo des Divisors b zu einen aktualisierten Rest zu erhalten: $r := r + a_i \bmod b$.

Am Ende der letzten Iteration wird als Ergebnis der Rest $r = a \bmod b$ ausgegeben.

Die Korrektheit des Verfahrens ergibt sich unmittelbar. Falls in dem Datenträger 10 keine modulare Addition zur Verfügung steht, muss der Additionsteilschritt durch die folgenden Schritte ersetzt werden:

$r := r + a_i$ , falls $(r \ge b)$, $r := r - b$.

Es fällt auf, und dies gilt auch für die nachfolgend beschriebenen weiteren Ausführungsformen des Verfahrens zur Bestimmung des Restes r, dass lediglich die Größe des Divisors b, nicht aber die Größe des Dividenden a durch Vorgaben der Multiplikationseinrichtung 35 - hier der Koprozessorlänge $\beta$ - beschränkt ist. Der Dividend a kann beliebig groß sein und wird mittels des Verfahrens dadurch bearbeitbar, dass die von dem Dividenden a abgeleiteten Koeffizienten $a_i$ so gewählt sind, dass die aus diesen Koeffizienten abgeleiteten Ergebnisse wiederum von der Multiplikationseinrichtung 35 verarbeitbar sind. Gemäß der gezeigten ersten Ausführungsform des Verfahrens zur Bestimmung des Restes sind die Koeffizienten $a_i$ zumindest durch die Größe des Modulus b beschränkt.

Falls in einem konkreten Anwendungszusammenhang der durchzuführenden kryptographischen Operation - beispielsweise im Rahmen einer RSA-CTR-Berechnung - nicht der Wert r, sondern der davon abgeleitete Wert *c: = a*R mod b benötigt wird, so kann dies leicht dadurch erreicht werden, dass an das vorstehend beschriebene Verfahren gemäß der ersten Ausführungsform ein weiterer Schritt angefügt wird gemäß der Vorschrift: c: = MMult(r, m, b). Der Wert c geht dann - falls a die Basis der RSA-CRT-Berechnung darstellt und b einen der beiden Primfaktoren - als Eingabewert in eine der beiden Teilexponentiationen der RSA-CRT-Berechnung ein.

Das im Folgenden dargestellte Verfahren zum Bestimmen des Restes r gemäß einer zweiten Ausführungsform ist gegenüber der ersten Ausführungsform leicht modifiziert. Es gibt nicht den Rest r selbst, sondern den eben angesprochenen Wert c: = a*R mod b aus. Ist lediglich der Wert c zu bestimmen, ist dieses Verfahren der ersten Ausführungsform leicht überlegen, wogegen jene im Allgemeinen bei der Berechnung von r vorzuziehen ist. Aus dem Wert c kann aber wiederum in einem Schritt der Wert r erhalten werden vermöge der Vorschrift r: = MMult(c,1, b). Es ist zu beachten, dass das folgende Verfahren lediglich dann Vorteile bringt, wenn $\log_2(a) - \log_2(b)$ um einiges größer ist als $\log_2(R) - \log_2(b)$, d.h. wenn a um einiges größer ist als R.

Die Eingaben zum Verfahren gemäß der zweiten Ausführungsform entsprechen im Wesentlichen denen der ersten Ausführungsform: Ein ungerader Divisor b mit $b < 2\beta \leq 2^\delta = R$ und ein Dividend a der Form a $=\Sigma i=0,..., n, a_i*(R)^i$, $0 \leq a_i < R$, sowie ein Ausgleichsfaktor m1 = R² mod b. Im Gegensatz zur ersten Ausführungsform wird die Grund-Zweier-Potenz nun direkt durch den Wert R vorgegeben, welche auch die Koeffizienten $a_i$ des Dividenden a größenmäßig beschränkt.

Das Verfahren gibt, wie erwähnt, am Ende nicht r = a mod b sondern c = a*R mod b aus.

Die Initialisierung des Wertes c erfolgt durch den Schritt: c:=0.

Bei der iterativen Bestimmung des Wertes c sind im Vergleich zur ersten Ausführungsform die Teilschritte der additiven Verknüpfung und der Montgomery-Multiplikation vertauscht. In jeder Iteration wird in einem ersten Teilschritt ein aktualisierter Wert c bestimmt. Dies geschieht mittels der Funktion $T(c + a_i) = c + a_i$ mod,b. Also auch in diesem Teilschritt wird - analog zum Verfahren der ersten Ausführungsform - ein additives Verknüpfen eines dem Rest entsprechenden Wertes c mit dem der Iteration zugehörigen Koeffizienten $a_i$ sowie ein Reduzieren modulo des Divisors b durchgeführt. Es ist zu beachten, dass die Funktion T Werte im Bereich 0 bis R+b-1 als Eingabe aufnimmt und Werte kleiner b ausgibt. Wenn R nicht wesentlich größer als b ist, kann die Berechnung der Funktion T beispielsweise durch wiederholtes Subtrahieren von b erfolgen.

In einem zweiten Teilschritt der Iteration erfolgt dann eine Montgomery-Multiplikation: c := MMult(c, m1, b). Am Ende der letzten Iteration wird der Wert c ausgegeben. Auch die Korrektheit dieses Verfahrens ergibt sich unmittelbar.

Die im Folgenden beschriebene dritte Ausführungsform eines Verfahrens zum Bestimmen des Restes r eignet sich zur Berechnung des Restes r = a mod b, wenn eine Multiplikationseinrichtung 35 zur Verfügung steht, welche als Ein- und Ausgabewerte solche Werte aufnehmen kann, die lediglich durch den Wert R beschränkt sind.

Auch hier wird als ein Eingabewert ein Ausgleichsfaktor m verwendet, welcher zumindest die folgenden Bedingungen erfüllt: $0 < m1 < R$ und $m_1 \equiv R^2$ mod b. Dieser Wert kann wie vorstehend beschrieben bestimmt werden. Ein Wert, der zu 2*R mod b kongruent ist, kann besonders effizient wie folgt bestimmt werden:

Die Bitlänge L von b wird vorgegeben, d.h. es gilt $2^{L-1} < b < 2^L \leq R$. Ausgehend hiervon wird ein Wert e := $(2^L - b)*2^{\beta-L+1}$ berechnet. Es kann einfach nachvollzogen werden, dass $e \equiv 2*R$ mod b ist. Für die Berechnung von m1 aus e gelten dann dieselben Überlegungen, wie sie bereits oben gemacht wurden.

Die nun dargestellte dritte Ausführungsform entspricht im Wesentlichen der vorstehend beschriebenen zweiten Ausführungsform:

Als Eingabe empfängt das Verfahren einen ungeraden Divisor b mit b < R, $2^{L-1} < b < 2^L$, einen Dividenden a der Form a = $\sum i=0,..., n$ $a_i*(R)^i$, $0 \leq a_i < R$ sowie einen Ausgleichsfaktor $m \equiv R^2$ mod b. Ausgegeben wird ein Wert r = a mod b und ein Wert c, wobei $0 \leq c < R$ und $c \equiv a*R$ mod b gilt.

Ein Wert c, entsprechend dem Wert c im zweiten Verfahren, wird initialisiert durch c := 0.

Für alle i=n, ..., 0 wird eine Iteration durchgeführt, welche die beiden beschriebenen Teilschritte umfasst: die additive Verknüpfung mit anschließender modularer Reduktion sowie die Montgomery-Multiplikation. Der erste Teilschritt hat hier die Form:

c := $c+a_i$; Solange $(c \geq R)$: c:= $c - (2^{\beta-L} *b)$.

Dieser Teilschritt liefert schließlich einen Wert, der zu $c + a_i \bmod b$ kongruent und kleiner als R ist. Die Reduktion von c um $(2^{\beta-L} *b)$ muss höchstens zweimal ausgeführt werden, da nach Voraussetzung $a_i < R < 2* (2^{\beta-L} *b)$ gilt. Der zweite Teilschritt erfolgt analog zur zweiten Ausführungsform gemäß $c := \mathrm{MMult}(c, m, b)$.

Soll am Ende $r = a \bmod b$ statt $c = a*R \bmod b$ ausgegeben werden, so wird wieder, wie erwähnt, der Schritt $r := \mathrm{MMult}(c,1, b)$ angehängt. Falls sich ergibt, dass $r = b$ ist, wird $r := 0$ gesetzt.

Die Korrektheit ist auch hier leicht einzusehen. Insbesondere ergibt sich aus den einleitenden Erörterungen zur Montgomery-Multiplikation, dass nach einer Montgomery-Multiplikation mit 1 der Wert r am Ende kleiner gleich b ist.

Im Folgenden werden nun bevorzugte Ausführungsformen zum Bestimmen des Quotienten q einer Division eines Dividenden a durch einen Divisor b, $q = a \operatorname{div} b$, dargestellt. Eine erste bevorzugte und einfache Ausführungsform wird mit Bezug auf Fig. 2 beschrieben.

Das Verfahren erhält als Eingabe einen Dividenden a und einen ungeraden Divisor b, welche beide durch eine vorgegebene Zweier-Potenz beschränkt sind, d.h. $a < 2^x$ und $b < 2^x$. Dabei kann x durch die Multiplikationseinrichtung 35 bestimmt sein.

Im Fall (I) der klassischen Montgomery-Multiplikation, wo Ein- und Ausgabewerte durch den Modulus beschränkt sind, wird $x = \beta$ gewählt, wobei $\beta$ die Koprozessorlänge des die Multiplikationseinrichtung bildenden Koprozessors darstellt. Für die bei der Montgomery-Multiplikation verwendete Zweierpotenz $R = 2^\delta$ gilt dann wieder $\beta \le \delta$.

Im Fall (II) der modifizierten Montgomery-Multiplikation, wo Ein- und Ausgabedaten durch R beschränkt sind, wird $x = \delta$ und damit $2^x = R$ gewählt. Schließlich geht der Rest $r = a \bmod b$ als Eingabewert ein. Dieser kann mittels eines der vorstehend beschriebenen Verfahren bestimmt worden sein oder aber im Laufe des Verfahrens selbst bestimmt werden.

Das Verfahren gibt als Ausgabewert am Ende den Wert $q = a \operatorname{div} b$ aus.

Wir beschreiben zunächst das Verfahren für den Fall (I) der klassischen Montgomery-Multiplikation.

In einem ersten Schritt S1 wird ein geeigneter Modulus M bestimmt, indem die Zweier-Potenz $2^x$ um den Divisor vermindert wird, d.h. $M = 2\beta - b$.

In einem zweiten Schritt S2 wird, falls erforderlich, ein Ausgleichsfaktor m' bestimmt. Dieser ist nur erforderlich, wenn $x = \beta < \delta$ gilt. Der Ausgleichsfaktor m' ist dann vorzugsweise von der Form $m' = 2^{\delta-\beta} \bmod M$ mit $M = 2^\beta-b$.

In einem dritten Schritt S3 wird der Dividend a um den Rest $r = a \bmod b$ vermindert: $a := a - r$.

Der zu bestimmende Quotient q wird nun mittels einer Montgomery-Multiplikation bezüglich des vorgegebenen Modulus M bestimmt, welche einen von dem Dividenden a abgeleiteten Wert als Eingabewert empfängt, hier den um den Rest verringerten Dividenden a selbst.

Zunächst wird in Schritt S4 der Wert q mit $q := 0$ initialisiert.

In Schritt S5 erfolgt dann eine Fallunterscheidung: Falls $a \ge M$, so wird q erhöht, $q := q+1$, und a um b vermindert, $a := a - b$. Dieser Schritt ist notwendig, damit die Zahl a, welche in die Montgomery-Multiplikation eingehen wird, kleiner als der Modulus $M = 2^\beta-b$ ist.

In Schritt S6 erfolgt nun die Bestimmung des Quotienten q vermöge

$$q := q + \mathrm{MMult}(a, m', M).$$

Das Verfahren wird hier noch einmal kurz beschrieben (Algorithmus 5).

| Input | Dividend $a < 2^\beta$ |
| | ungerader Divisor $b < 2^\beta \le R = 2^\delta$ |
| | $r = a \bmod b$ |
| Output | $q = a \operatorname{div} b$ |

Verfahren

S1 Berechne $M := 2^\beta - b$
S2 Berechne $m' := 2^{\delta-\beta} \bmod M$
S3 Setze $a := a - r$
S4 Setze $q := 0$.
S5 Falls $(a \ge M)$: Setze $q := q+1$ und $a := a-b$
S6 Berechne $q := q + \mathrm{MMult}(a, m', M)$
S7 Ausgabe von q

Es folgen einige Argumente, welche die Korrektheit des Verfahrens zeigen. Der Einfachheit halber kann im Rahmen dieses Beweises r = 0 angenommen werden. Dann ist a = q*b < $2^\beta$ = ($2^\beta$ - b) + b. Damit folgt, dass im Fall von a $\geq 2^\beta$ -b > 0 die Ungleichung 0 $\leq$ a - b < $2^\beta$ - b gilt. Wegen q = ((a-b) div b) +1 kann direkt der Fall a < $2^\beta$ - b betrachtet werden. Für b=1 und b = $2^\beta$ -1 kann der Nachweis direkt geführt werden. Sei also 1 < b < $2^\beta$ -1, so gilt

$$\text{MMult}(a, m', M) \quad = q*b*2^{\delta-\beta} * R-1 \qquad \text{mod} (2^\beta-b)$$

$$= q*b*2^{-\beta}*2^{\delta}*2^{-\delta} \qquad \text{mod} (2^\beta-b)$$

$$= q*b*b^{-1} \qquad \text{mod} (2^\beta-b)$$

$$= q \qquad \text{mod} (2^\beta-b)$$

Schließlich ist q < $2^\beta$/b < $2^\beta$-b, woraus das zu zeigende folgt.

Die erste Zeile der vorstehenden Ableitung ergibt sich dabei aus der Definition der Montgomery-Multiplikation und der Definition von a. In der zweiten Zeile wird R = $2^\delta$, also auch $R^{-1}$ = $2^{-\delta}$ ausgenutzt. Wesentlich ist die geltende Beziehung $2^{-\beta} \equiv b^{-1}$ mod ($2^\beta$-b), welche die Grundlage für den Übergang zur dritten Zeile bildet und welche auch in den nachfolgenden Ausführungsformen jeweils Anwendung finden wird. Die Korrektheit dieser Beziehung folgt einfach aus $2^\beta$ = ($2^\beta$ - b) + b, d.h. $2^\beta \equiv$ b mod ($2^\beta$-b) und damit auch $2^{-\beta} \equiv b^{-1}$ mod ($2^\beta$-b).

Die modulare Reduktion bei der Bildung von m' in Schritt S2, m'= $2^{\delta-\beta}$ mod M mit M = $2^\beta$-b, ist in den meisten Fällen gar nicht auszuführen: Falls b < $2^{\beta-1}$ und 2$\beta \geq \delta$+1, so gilt bereits $2^{\delta-\beta} \leq 2^{\beta-1}$ < $2^\beta$ - b. Im Fall b > $2^{\beta-1}$ dagegen ist a < $2^\beta$< 2b, und der Quotient q = 0 oder 1 kann direkt abgelesen werden, ohne das obige Verfahren anzuwenden.

Wie erwähnt, kann das beschriebene Verfahren auch im Fall (II) der erweiterten Montgomery-Multiplikation gemäß der ersten Ausführungsform mit dem Modulus M = R-b durchgeführt werden. Dies ist dann der Fall, wenn die Multiplikationseinrichtung 35 des Datenträgers 10, also beispielsweise der Koprozessor 35, eingerichtet ist, eine Montgomery-Multiplikation durchzuführen, wobei Ein- und Ausgabewerte lediglich durch R beschränkt sind. D.h. es gilt a, b < R und, wie erwähnt, M = R-b.

Das Verfahren gestaltet sich dann etwas einfacher, es kann nämlich auf den Ausgleichsfaktor m' - und daher auf den Schritt S2 zur Bestimmung desselben - verzichtet werden. Schritt S3 kann wie beschrieben durchgeführt werden, a := a -r. Alternativ, und dies soll hier angenommen werden, wird die Operation des Schritt S3 direkt in Schritt S6 durchgeführt, d.h. es erfolgt in Schritt S6 die Bestimmung des Quotienten q vermöge q := MMult(a-r,1, M) mit M = R-b.

Das Verfahren wird hier noch einmal kurz beschrieben (Algorithmus 12).

| | | |
|---|---|---|
| Input | Dividend a < R | |
| | ungerader Divisor b < R | |
| | r = a mod b | |
| Output | q = a div b | |
| Verfahren | | |
| S1 | Berechne M := R - b | |
| S6 | Berechne q := MMult(a-r,1, M) | |
| S7 | Ausgabe von q | |

Der Korrektheitsbeweis kann hier knapper gehalten werden. Es ist a = q*b + r, 0 $\leq$ r < b. Wird die aktuelle Situation betrachtet, d.h. MMult(a-r, 1, M) mit M = R-b, so berechnet man

$$K \quad = \quad (a-r) * 1 * (- (R - b)^{-1}) \qquad \text{mod } R$$

$$= \quad q * b * (-1) * (-b)^{-1} \qquad \text{mod } R$$

$$= \quad q$$

also W = ((a-r) * 1 + K * (R-b)) / R = (q*b + q*(R-b)) / R = q und damit MMult(a-r, 1, R-b) = q.

Die im Folgenden beschriebene zweite Ausführungsform des erfindungsgemäßen Verfahrens zum Bestimmen eines Quotienten q einer Division eines Dividenden a durch einen Divisor b ist für - im Vergleich zur ersten Ausführungsform - größere Dividenden geeignet. Es ist lediglich einzuhalten, dass die Größe des Dividenden a durch die Größe des Produkts aus der vorgegebenen Zweier-Potenz mit dem Divisor beschränkt ist, d.h. es hat zu gelten, dass $a < 2^x * b$, wobei wieder $x = \beta$ oder $x = \delta$ gelten können, wie dies bereits mit Bezug auf die erste Ausführungsform ausgeführt worden ist. Für den Divisor b allerdings gilt, dass dieser durch die Hälfte der vorgegebenen Zweier-Potenz beschränkt wird, d.h. es gilt $b < 2^{x-1}$. Das Verfahren gemäß dieser zweiten Ausführungsform gibt den Quotienten $q = a$ div $b$ aus.

Der Modulus M wird wie in der ersten Ausführungsform (vgl. Fig. 2, S1) als Differenz zwischen der vorgegebenen Zweier-Potenz und dem Divisor bestimmt, d.h. $M := 2^x - b$, wobei beispielsweise $x = \beta$ oder $x = \delta$ gelten kann.

Wir beschreiben zunächst wieder das Verfahren für den Fall (I) der klassischen Montgomery-Multiplikation.

Zunächst wird der Dividend a um den Rest $r = a$ mod $b$ vermindert: $a := a - r$.

Abweichend von der ersten Ausführungsform wird in einem der Montgomery-Multiplikation vorgelagerten Schritt der um den Rest verringerte Dividend a in zwei Teil $a_0$ und $a_1$ zerlegt, um die Verarbeitbarkeit des größeren Dividenden durch die Multiplikationseinrichtung 35 zu gewährleisten. Es wird dazu jeweils der Quotient und der Rest des Dividenden durch die vorgegebene Zweier-Potenz bestimmt, d.h. $a_0 := a$ mod $2^\beta$ und $a_1 := a$ div $2^\beta$.

Außerdem ist wieder ein Ausgleichsfaktor $m' = 2^{\delta-\beta}$ mod $(2^\beta-b)$ erforderlich. Dieser kann in einem Schritt analog zu Schritt S1 in Fig. 2 bestimmt werden. Alternativ, wie nachstehend beschrieben, kann der entsprechende Faktor auch direkt in die Berechnung der entsprechenden Montgomery-Multiplikation eingehen.

Bevor die Montgomery-Multiplikation bezüglich dem Modulus M und mit dem von dem Dividenden abgeleiteten Wert a0 als einen Eingabewert durchgeführt wird, erfolgt ein zusätzlicher Schritt, in dem, falls a0 größer als der Modulus ist, d.h. $a0 > 2^\beta - b$ gilt, a0 um den Wert $2^\beta - b$ vermindert wird. D.h. es werden die folgenden Vorschriften ausgeführt: Falls $a0 > 2^\beta - b$: Setze $a_0 := a_0 - (2^\beta - b)$. Damit wird gewährleistet, dass der Wert a0 kleiner als der Modulus $M = 2^\beta - b$ ist und in der folgenden Montgomery-Multiplikation verwendet werden kann.

Die anschließende Montgomery-Multiplikation liefert als Ausgabewert einen Zwischenwert q, welcher zum Bestimmen des Quotienten verwendet wird. Es gilt: $q := MMult(a_0, m', 2^\beta - b)$.

Schließlich folgt ein weiterer Schritt, welcher der Zerlegung des Dividenden a in die Bestandteile a0 und a1 Rechnung trägt: $q := q + a_1$ mod $(2^\beta-b)$, d.h. das Ergebnis der Montgomery-Multiplikation wird zu dem Hilfsquotienten a1 addiert und modulo des Modulus $M = 2^\beta-b$ reduziert, wobei der Hilfsquotient, wie beschrieben, durch Division des um den Rest verringerten Dividenden modulo der Zweier-Potenz gegeben ist. Für die modulare Addition $q := q + a_1$ mod $(2^\beta-b)$ kann man entweder auf eine im Rechenwerk vorhandene modulare Addition zurückgreifen oder eine einfache Addition $q + a_1$ ausführen und anschließend höchstens einmal $2^\beta-b$ abziehen. Dies folgt aus $a_1 \leq b$ und $q + a_1 < 2^* (2^\beta-b)$.

Abschließend wird, falls der Quotient q nicht dieselbe Parität aufweist wie der um den Rest verringerte Dividend, d.h. falls $q \neq a$ mod 2 gilt, der Modulus zu dem Quotienten addiert: $q := q + (2^\beta-b)$.

Das Verfahren wird hier noch einmal kurz beschrieben (Algorithmus 6).

| | |
|---|---|
| Input | Dividend $a < 2^\beta * b$ |
| | ungerader Divisor $b < 2^{\beta-1}$ |
| | $r = a$ mod $b$ |
| Output | $q = a$ div $b$ |

Verfahren

(1) Berechne $M := 2^\beta - b$
(2) Berechne $m' := 2^{\delta-\beta}$ mod M
(3) Setze $a := a - r$
(4) Berechne $a_0 := a$ mod $2^\beta$ und $a_1 := a$ div $2^\beta$
(5) Falls $(a_0 \geq M)$: Setze $a_0 := a_0 - M$
(6) Berechne $q := MMult(a_0, m', M)$
(7) Berechne $q := q + a_1$ mod M
(8) Falls $(q \neq a$ mod 2): $q := q + M$
(9) Ausgabe von q

Auch die Korrektheit der zweiten Ausführungsform soll kurz skizziert werden. Es kann wieder r=0 angenommen werden. Gemäß vorstehend beschriebener Zerlegung des Dividenden a gilt $a = q*b = 2^\beta * a_1 + a_0$. Aus $b < 2^{\beta-1}$ folgt dann $a_0 < 2^\beta = 2*2^{\beta-1} < 2*(2^\beta - b)$, und wegen $q*b = a < 2^\beta*b$ gilt $q < 2*(2^\beta-b)$.

Algorithmus 5 und 7 kommen mit der schwächeren Bedingung $b < 2^\beta$ aus, während Algorithmus 6 die stärkere Bedingung $b < 2^{\beta-1}$ braucht. Will man alle drei Algorithmen kombinieren, so muss man die stärkere Bedingung $b < 2^{\beta-1}$ fordern.

Außerdem ist

$$q \equiv a*b^{-1} \equiv a*2^{-\beta} \equiv a_1 + (a_0 * 2^{-\beta}) \equiv a_1 + a_0 * m' * R^{-1} \bmod (2^{\beta}-b).$$

Es wird, wie schon mehrfach, die Beziehung $b^{-1} \equiv 2^{-\beta} \bmod (2^{\beta}-b)$ verwendet, sowie die Darstellung des Dividenden a in Form seiner Bestandteile $a_0$ und $a_1$. Wegen $q \equiv a \bmod 2$ und $q < 2 * (2^{\beta}-b)$ folgt die Behauptung.

Die zweite Variante der zweiten Ausführungsform des Verfahrens zur Bestimmung des Quotienten q im Fall (II) der erweiterten Montgomery-Multiplikation verläuft im Wesentlichen analog zu der eben beschriebenen ersten Version.

Zunächst wird der Dividend a um den Rest r = a mod b vermindert: a := a -r. Dann wir der um den Rest verringerte Dividend a zerlegt in a = a1 * R + $a_0$ mit $a_0$ := a mod R und $a_1$ := a div R.
Ein Ausgleichsfaktor wie im Fall (I) ist nicht erforderlich.
Es folgt die Montgomery-Multiplikation q := MMult($a_0$, 1, R -b). Anschließend folgt die modulare Addition q = q + $a_1$ mod (R -b).
Falls $q \neq a \bmod 2$ ist, so wird q = q + (R-b) berechnet.

Das Verfahren wird hier noch einmal kurz beschrieben (Algorithmus 13).

| | |
|---|---|
| Input | Dividend a < R * b |
| | ungerader Divisor b < R/2 |
| | r = a mod b |
| Output | q = a div b |

Verfahren

(1) Berechne M := R - b
(2) Setze a := a - r
(3) Berechne $a_0$ := a mod R und $a_1$ := a div R
(4) Berechne q := MMult($a_0$,1, M)
(5) Berechne q := q + $a_1$ mod M
(6) Falls ($q \neq a \bmod 2$): q := q + M
(7) Ausgabe von q

Der Beweis der Korrektheit dieser Version geht völlig analog zu dem Beweis der ersten Variante und wird hier nicht wiederholt.

Eine dritte Ausführungsform eines Verfahrens in einem Datenträger 10 zum Ausführen einer kryptographischen Operation auf sicherheitsrelevanten Daten, welche ebenfalls einen Schritt des Bestimmens des Quotienten einer Division eines Dividenden durch einen Divisor umfasst, wird abschließend dargestellt. Auch diese Ausführungsform kann in zwei Versionen vorliegen, abhängig davon, in welcher Weise die Ein- und Ausgabewert der Multiplikationseinrichtung beschränkt sind. Die dritte Ausführungsform empfängt als Eingabewerte einen Dividenden a, welcher nochmals größer sein kann als in der zweiten Ausführungsform. Der Dividend a ist hier beschränkt durch das Quadrat der vorgegebenen Zweier-Potenz, d.h. $a < 2^{2x}$, wobei, wie vorstehend, $x = \beta$ oder $x = \delta$ gelten kann. Der Divisor ist durch die Zweier-Potenz selbst beschränkt, d.h. b < 2x. Als weiterer Eingabewert wird hier ein Ausgleichsfaktor m benötigt, wie er mit Bezug auf die verschiedenen Verfahren zum Bestimmen eines Restes eines Dividenden modulo eines Divisors beschrieben worden ist, z.B. $m = R^2 \bmod b$.

Die dritte Ausführungsform gibt nun nicht direkt den Quotienten q aus, sondern zwei Werte a' und c, für die gilt, dass $a' \equiv a \bmod b$ und q = a div b = c + (a' div b), wobei $a' < 2^x * b$ und $0 \leq c < 2^{2x}$ ist. D.h. der Quotient q = a div b kann dann, ausgehend von dem Ausgabewert c und unter Anwendung beispielsweise der vorstehend beschriebenen zweiten Ausführungsform auf den Ausgabewert a' bestimmt werden.

Das Verfahren gemäß der dritten Ausführungsform umfasst zwei wesentliche Schritte. In einem ersten Schritt wird ein Hilfsquotient, welcher mit $q_1$ bezeichnet wird, bestimmt. Dieser ergibt sich aus einer Division eines von dem Dividenden abgeleiteten Werts a1 durch den Divisor b, d.h. $q_1$ := $a_1$ div b. Der Hilfsquotient kann dabei beispielsweise mittels eines Verfahrens gemäß der ersten oder der zweiten Ausführungsform bestimmt werden. Der dazu als Eingabewert notwendige Rest $r_1$ := $a_1$ mod b kann mittels eines der eingangs beschriebenen Verfahren bestimmt werden. Hier geht zusätzlich der Ausgleichsfaktor m ein.

Der von dem Dividenden a abgeleitete Wert a1, ergibt sich, ähnlich wie in der zweiten Ausführungsform, durch eine Zerlegung des Dividenden a in einen Quotienten und einen Rest einer Division des Dividenden durch die vorgegebene Zweier-Potenz $2^x$, mit dem Unterschied, dass hier der Quotient als abgeleiteter Wert verwendet wird. Der abgeleitete Wert a1 ergibt sich als $a_1$ := a div $2^x$.

In einem zweiten Schritt wird nun der Hilfsdividend a' durch Subtraktion eines Produkts eines von dem Hilfs-quotienten $q_1$ abgeleiteten Werts, der mit c bezeichnet wird, mit dem Divisor b von dem Dividenden a bestimmt. D.h. es gilt a' := a - c*b.

Der von dem Hilfsquotienten q1 abgeleitete Wert c ergibt sich vorzugsweise als Produkt des Hilfsquotienten q1 mit der vorgegebenen Zweier-Potenz $2^x$, d.h. c := $q_1 * 2^x$.

Um nun, wie vorstehend kurz beschrieben, den Quotienten q = a div b zu bestimmen, können die beiden folgenden Schritte angeschlossen werden, wenn zusätzlich b < $2^{x-1}$ gilt.

Mittels des Verfahrens gemäß der zweiten Ausführungsform wird ein zweiter Hilfsquotient $q_2$ als Quotient einer Division des Hilfsdividenden a' durch den Divisor b bestimmt, d.h. $q_2$ := a' div b.

Schließlich wird der zweite Hilfsquotient $q_2$ zu dem von dem ersten Hilfsquotienten abgeleiteten Wert c addiert, um den Quotienten q zu bestimmen: q:=c+$q_2$.

Im Fall (I) der klassischen Montgomery-Multiplikation lautet das Verfahren wie folgt (Algorithmus 7):

| | |
|---|---|
| Input | Dividend a < $2^{2\beta}$ |
| | ungerader Divisor b < $2^{\beta}$ |
| | Montgomery-Faktor m = $R^2$ mod b |
| Output | Zahlen a' < $2^{\beta}$ * b und $0 \leq c < 2^{2\beta}$ mit |
| | a' = a mod b und q = a div b = c + (a' div b) |

Verfahren

(1) Berechne a1 := a div $2^{\beta}$
(2) Berechne $r_1$ := $a_1$ mod b (mittels eines Reduktions-Verfahrens unter Verwendung von m)
(3) Berechne $q_1$ := $a_1$ div b (mittels eines Verfahrens gemäß der ersten Ausführungsform)
(4) Setze c := $2^{\beta}$ * q1
(5) Setze a' := a - c*b
(6) Ausgabe von a' und c

Falls der Divisor noch die Bedingung b < $2^{\beta-1}$ erfüllt, so kann aus a' und c der Wert q = a div b wie folgt ermittelt werden:

(7) Berechne $q_2$ := a' div b (mittels eines Verfahrens gemäß der zweiten Ausführungsform)
(8) Setze q := c + $q_2$
(9) Ausgabe von q

Im Fall (II) der erweiterten Montgomery-Multiplikation lautet das Verfahren wie folgt (Algorithmus 14):

| | |
|---|---|
| Input | Dividend a < $R^2$ |
| | ungerader Divisor b < R |
| | Montgomery-Faktor m < R mit m $\equiv R^2$ mod b |
| Output | Zahlen a' < R * b und $0 \leq c < R^2$ mit |

a' $\equiv$ a mod b und q = a div b = c + (a' div b)

Verfahren

(1) Berechne $a_1$ := a div R
(2) Berechne $r_1$ := $a_1$ mod b (mittels eines Reduktions-Verfahrens unter Verwendung von m)
(3) Berechne $q_1$ := $a_1$ div b (mittels eines Verfahrens gemäß der ersten Ausführungsform)
(4) Setze c := R * $q_1$
(5) Setze a' := a - c*b
(6) Ausgabe von a' und c

Falls der Divisor noch die Bedingung b < R/2 erfüllt, so kann aus a' und c der Wert q = a div b wie folgt ermittelt werden:

(7) Berechne $q_2$ := a' div b (mittels eines Verfahrens gemäß der zweiten Ausführungsform)

(8) Setze $q := c + q_2$

(9) Ausgabe von q

Auch die Korrektheit dieses Verfahrens wird abschließend kurz bewiesen. Der Dividend a wird zerlegt in a = $2^x * a_1 + a_0$ mit $0 \leq a_0, a_1 < 2^x$. Dann ist a' = a - c*b, und es folgt unmittelbar a $\equiv$ a' mod b, a div b = c + (a' div b). Dann muss nur noch die Größenbeschränkung für den Hilfsdividenden a' gzeigt werden. Diese folgt aus der Ungleichung

$$a' = 2^x * (a_1 \bmod b) + a_0 \leq 2^x * (b-1) + (2^x - 1) = 2^x * b - 1.$$

## Patentansprüche

1. Verfahren in einem portablen Datenträger (10) zum Ausführen einer kryptographischen Operation auf sicherheits-relevante Daten, umfassend einen Schritt des Bestimmens des Quotienten (q) einer Division eines Dividenden (a) durch einen Divisor (b), **dadurch gekennzeichnet, dass** der Quotient (q) mittels einer Divisionseinrichtung (54) des Datenträgers (10) dadurch bestimmt wird, dass der Dividend (a) um seinen Rest (r) modulo dem Divisor (b) vermindert wird (S3) und eine Montgomery-Multiplikation bezüglich eines vorgegebenen Modulus (M) durchgeführt wird (S4), wobei die Montgomery-Multiplikation mittels einer Multiplikationseinrichtung (35) des Datenträgers (10) durchgeführt wird, die Montgomery-Multiplikation einen von dem verminderten Dividenden (a) abgeleiteten Wert (a; $a_0$; $a_1$) als einen Eingabewert empfängt und der vorgegebene Modulus (M) dadurch gebildet wird (S1), dass der Divisor (b) von einer vorgegebenen Zweier-Potenz subtrahiert wird.

2. Verfahren nach Anspruch 1, **dadurch gekennzeichnet, dass** die Multiplikationseinrichtung (35) einen Koprozessor (35) umfasst, welcher die Montgomery-Multiplikation durchführt.

3. Verfahren nach Anspruch 1, **dadurch gekennzeichnet, dass** die Zweier-Potenz durch den der Montgomery-Multiplikation zugeordneten R-Wert oder durch Vorgaben des Koprozessors vorgegeben wird.

4. Verfahren nach einem der Ansprüche 1 oder 3, **dadurch gekennzeichnet, dass** die Größe des Dividenden (a) und die Größe des Divisors (b) durch die Größe der Zweier-Potenz beschränkt wird und der von dem verminderten Dividenden (a) abgeleiteten Wert (a) durch den verminderten Dividenden (a) selbst vorgegeben wird.

5. Verfahren nach einem der Ansprüche 1 oder 3, **dadurch gekennzeichnet, dass** die Größe des Dividenden (a) durch die Größe des Produktes der Zweier-Potenz mit dem Divisor (b) beschränkt wird, die Größe des Divisors (b) durch die Hälfte der Größe der Zweier-Potenz beschränkt wird und der von dem verminderten Dividenden (a) abgeleiteten Wert ($a_0$) durch den Rest des verminderten Dividenden (a) modulo der Zweier-Potenz vorgegeben wird.

6. Verfahren nach Anspruch 5, **dadurch gekennzeichnet, dass** das Ergebnis der Montgomery-Multiplikation zu einem Hilfsquotienten ($a_1$) addiert und modulo dem Modulus (M) reduziert wird, wobei der Hilfsquotient ($a_1$) durch Division des verminderten Dividenden (a) durch die Zweier-Potenz bestimmt wird.

7. Verfahren nach Anspruch 6, **dadurch gekennzeichnet, dass**, falls das Ergebnis der modularen Addition nicht die gleiche Parität aufweist wie der verminderte Dividend (a), der Modulus (M) zu dem Ergebnis der modularen Addition addiert wird.

8. Verfahren nach einem der Ansprüche 1 bis 7, **dadurch gekennzeichnet, dass** die Montgomery-Multiplikation einen Ausgleichsfaktor (m') als zweiten Eingabewert empfängt (S2, S4), falls die Ein- und Ausgabewerte der Montgomery-Multiplikation durch eine Größe beschränkt werden, die kleiner ist als die Größe des der Montgomery-Multiplikation zugeordneten R-Wertes.

9. Verfahren in einem portablen Datenträger (10) zum Ausführen einer kryptographischen Operation auf sicherheits-relevante Daten, umfassend einen Schritt des Bestimmens eines Quotienten (q) einer Division eines Dividenden (a) durch einen Divisor (b), **gekennzeichnet durch** die von einer Divisionseinrichtung (54) des Datenträgers (10) durchgeführten Schritte:

    - Bestimmen eines Hilfsquotienten ($q_1$) einer Division eines von dem Dividenden (a) abgeleiteten Wertes ($a_1$)

**durch** den Divisor (b) mittels eines Verfahrens nach einem der Ansprüche 1 bis 8;
- Bestimmen eines Hilfsdividenden (a') **durch** Subtraktion eines Produkts eines von dem Hilfsquotienten ($q_1$) abgeleiteten Werts (d) mit dem Divisor (b) von dem Dividenden (a), wobei im Rahmen des Verfahrens durchzuführende Montgomery-Multiplikationen von einer Multiplikationseinrichtung (35) des Datenträgers (10) durchgeführt werden.

10. Verfahren nach Anspruch 9, **dadurch gekennzeichnet, dass** der von dem Dividenden (a) abgeleitete Wert ($a_1$) als Quotient des Dividenden (a) durch eine vorgegebene Zweier-Potenz gebildet wird und dass der von dem Hilfsquotienten ($q_1$) abgeleitete Wert als Produkt des Hilfsquotienten ($q_1$) mit der vorgegebenen Zweier-Potenz gebildet wird.

11. Verfahren nach einem der Ansprüche 9 oder 10, **gekennzeichnet durch** die weiteren Schritte:

   - Bestimmen eines zweiten Hilfsquotienten ($q_2$) einer Division des Hilfsdividenden (a') **durch** den Divisor (b) mittels eines Verfahrens nach einem der Ansprüche 1 bis 8;
   - Bestimmen des Quotienten (q) der Division des Dividenden (a) **durch** den Divisor (b) **durch** Addition des von dem Hilfsquotienten ($q_1$) abgeleiteten Werts (d) zu dem zweiten Hilfsquotienten ($q_2$).

12. Verfahren nach einem der Ansprüche 10 oder 11, **dadurch gekennzeichnet, dass** die Größe des Dividenden (a) durch die Größe des Quadrats der Zweier-Potenz beschränkt wird und dass die Größe des Divisors (b) durch die Größe der Zweier-Potenz beschränkt wird.

13. Portabler Datenträger (10) zum Ausführen einer kryptographischen Operation auf sicherheitsrelevanten Daten, umfassend einen Prozessor (30), einen Speicher (40; 50; 60), eine Multiplikationseinrichtung (35) zum Durchführen einer Montgomery-Multiplikation sowie eine Divisionseinrichtung (54), welche eingerichtet ist, im Rahmen der kryptographischen Operation einen Quotienten (q) eines Dividenden (a) durch einen Divisor (b) zu bestimmen, **dadurch gekennzeichnet, dass** die Divisionseinrichtung (54) eingerichtet ist, den Quotienten (q) zu bestimmen, indem der Dividend (a) um seinen Rest (r) modulo dem Divisor (b) vermindert wird und eine Montgomery-Multiplikation bezüglich eines vorgegebenen Modulus (M) mittels der Multiplikationseinrichtung (35) durchgeführt wird, wobei die Multiplikationseinrichtung (35) eingerichtet ist, zum Durchführen der Montgomery-Multiplikation einen von dem verminderten Dividenden (a) abgeleiteten Wert als einen Eingabewert zu empfangen, wobei der vorgegebene Modulus (M) dadurch gebildet wird, dass der Divisor (b) von einer vorgegebenen Zweier-Potenz subtrahiert wird.

14. Datenträger nach Anspruch 13, **dadurch gekennzeichnet, dass** die Multiplikationseinrichtung (35) als Koprozessor (35) ausgebildet ist.

15. Datenträger nach Anspruch 13 oder 14, **dadurch gekennzeichnet, dass** die Multiplikationseinrichtung (35) eingerichtet ist, eine Montgomery-Multiplikation durchzuführen, deren Ein- und Ausgabewerte im Bereich von -M bis M-1 oder im Bereich von 0 bis 2*M-1 oder im Bereich von 0 bis R-1 liegen, wobei mit M die Größe des Modulus (M) bezeichnet ist, bezüglich dessen die Montgomery-Multiplikation durchgeführt wird, und wobei mit R die Größe des dem Modulus (M) bezüglich der Montgomery-Multiplikation zugeordneten R-Wertes bezeichnet ist.

16. Datenträger nach einem der Ansprüche 13 bis 15, **dadurch gekennzeichnet, dass** die Divisionseinrichtung (54) eingerichtet ist, ein Verfahren nach einem der Ansprüche 1 bis 12 durchzuführen.

**Claims**

1. A method in a portable data carrier (10) for executing a cryptographic operation on security-relevant data, comprising a step of determining the quotient (q) of a division of a dividend (a) by a divisor (b), **characterized in that** the quotient (q) is determined by means of a division device (54) of the data carrier (10) by the dividend (a) being reduced (S3) by its remainder (r) modulo the divisor (b) and a Montgomery multiplication being performed (S4) with reference to a predetermined modulus (M), wherein the Montgomery multiplication is performed by means of a multiplication device (35) of the data carrier (10), the Montgomery multiplication receives as an input value a value ($a$; $a_0$; $a_1$) derived from the reduced dividend (a), and the predetermined modulus (M) is formed (S1) by the divisor (b) being subtracted from a predetermined power of two.

2. The method according to claim 1, **characterized in that** the multiplication device (35) comprises a coprocessor (35) performing the Montgomery multiplication.

3. The method according to claim 1, **characterized in that** the power of two is predetermined by the R value allocated to the Montgomery multiplication or by specifications of the coprocessor.

4. The method according to any of the claims 1 or 3, **characterized in that** the quantity of the dividend (a) and the quantity of the divisor (b) is limited by the quantity of the power of two and the value (a) derived from the reduced dividend (a) is predetermined by the reduced dividend (a) itself.

5. The method according to any of the claims 1 or 3, **characterized in that** the quantity of the dividend (a) is limited by the quantity of the product of the power of two with the divisor (b), the quantity of the divisor (b) is limited by the half of the quantity of the power of two and the value $(a_0)$ derived from the reduced dividend (a) is predetermined by the remainder of the reduced dividend (a) modulo the power of two.

6. The method according to claim 5, **characterized in that** the result of the Montgomery multiplication is added to an auxiliary quotient $(a_1)$ and reduced modulo the modulus (M), wherein the auxiliary quotient $(a_1)$ is determined by division of the reduced dividend (a) by the power of two.

7. The method according to claim 6, **characterized in that**, if the result of the modular addition does not have the same parity as the reduced dividend (a), the modulus (M) is added to the result of the modular addition.

8. The method according to any of the claims 1 to 7, **characterized in that** the Montgomery multiplication receives (S2, S4) a compensating factor (m') as second input value, if the input values and output values of the Montgomery multiplication are limited by a quantity which is smaller than the quantity of the R value allocated to the Montgomery multiplication.

9. A method in a portable data carrier (10) for executing a cryptographic operation on security-relevant data, comprising a step of determining a quotient (q) of a division of a dividend (a) by a divisor (b), **characterized by** the steps carried out by a division device (54) of the data carrier (10):

  - determining an auxiliary quotient $(q_1)$ of a division of a value $(a_1)$ derived from the dividend (a) by the divisor (b) by means of a method according to any of the claims 1 to 8;
  - determining an auxiliary dividend (a') by subtraction from the dividend (a) of a product of a value (d) derived from the auxiliary quotient $(q_1)$ with the divisor (b),
  wherein Montgomery multiplications to be performed in the framework of the method are carried out by a multiplication device (35) of the data carrier (10).

10. The method according to claim 9, **characterized in that** the value $(a_1)$ derived from the dividend (a) is formed as a quotient of the dividend (a) divided by a predetermined power of two, and that the value derived from the auxiliary quotient $(q_1)$ is formed as a product of the auxiliary quotient $(q_1)$ with the predetermined power of two.

11. The method according to any of the claims 9 or 10, **characterized by** the further steps of:

  - determining a second auxiliary quotient $(q_2)$ of a division of the auxiliary dividend (a') by the divisor (b) by means of a method according to any of the claims 1 to 8;
  - determining the quotient (q) of the division of the dividend (a) by the divisor (b) by addition to the second auxiliary quotient $(q_2)$ of the value (d) derived from the auxiliary quotient $(q_1)$.

12. The method according to any of the claims 10 or 11, **characterized in that** the quantity of the dividend (a) is limited by the quantity of the square of the power of two and that the quantity of the divisor (b) is limited by the quantity of the power of two.

13. A portable data carrier (10) for executing a cryptographic operation on security-relevant data, comprising a processor (30), a memory (40; 50; 60), a multiplication device (35) for performing a Montgomery multiplication and a division device (54) that is adapted to determine, within the framework of the cryptographic operation, a quotient (q) of a dividend

  (a) by a divisor (b) **characterized in that** the division device (54) is adapted to determine the quotient (q) by the dividend (a) being reduced by its remainder (r) modulo the divisor (b) and a Montgomery multiplication is performed with reference to a predetermined modulus (M) by means of the multiplication device (35), wherein the multiplication device (35) is adapted, for performing the Montgomery multiplication, to receive as an input value a value derived from the reduced dividend (a), wherein the predetermined modulus (M) is formed by the divisor

(b) being subtracted from a predetermined power of two.

14. The data carrier according to claim 13, **characterized in that** the multiplication device (35) is executed as a coprocessor (35).

15. The data carrier according to claim 13 or 14, **characterized in that** the multiplication device (35) is adapted to perform a Montgomery multiplication the input values and output values of which are in the range of -M to M-1 or in the range of 0 to 2*M-1 or in the range of 0 to R-1, wherein M designates the quantity of the modulus (M), with reference to which the Montgomery multiplication is performed, and wherein R designates the quantity of the R value allocated to the modulus (M) with reference to the Montgomery multiplication.

16. The data carrier according to any of the claims 13 to 15, **characterized in that** the division device (54) is adapted to perform a method according to any of the claims 1 to 12.

## Revendications

1. Procédé dans un support de données portable (10), destiné à exécuter une opération cryptographique sur des données touchant à la sécurité, comprenant une étape de la détermination du quotient (q) d'une division d'un dividende (a) par un diviseur (b), **caractérisé en ce que** le quotient (q) est, au moyen d'un dispositif de division (54) du support de données (10), déterminé en réduisant (S3) le dividende (a) de son reste (r) modulo le diviseur (b) et en effectuant une multiplication de Montgomery (S4) relativement à un module (M) prédéterminé, la multiplication de Montgomery étant effectuée au moyen d'un dispositif de multiplication (35) du support de données (10), la multiplication de Montgomery recevant en tant que valeur d'entrée une valeur $(a; a_0; a_1)$ dérivée du dividende (a) réduit, et le modulo (M) prédéterminé étant constitué (S1) en soustrayant le diviseur (b) d'une puissance de deux prédéterminée.

2. Procédé selon la revendication 1, **caractérisé en ce que** le dispositif de multiplication (35) comprend un coprocesseur (35) qui effectue la multiplication de Montgomery.

3. Procédé selon la revendication 1, **caractérisé en ce que** la puissance de deux est prédéterminée par la valeur R affectée à la multiplication de Montgomery ou par prédétermination du coprocesseur.

4. Procédé selon une des revendications 1 ou 3, **caractérisé en ce que** la taille du dividende (a) et la taille du diviseur (b) est limitée par la taille de la puissance de deux et **en ce que** la valeur (a) dérivée du dividende (a) réduit est prédéterminée par le dividende (a) réduit lui-même.

5. Procédé selon une des revendications 1 ou 3, **caractérisé en ce que** la taille du dividende (a) est limitée par la taille du produit de la puissance de deux et du diviseur (b), **en ce que** la taille du diviseur (b) est limitée par la moitié de la taille de la puissance de deux, et ce que la valeur $(a_0)$ dérivée du dividende (a) réduit est prédéterminée par le reste du dividende (a) modulo la puissance de deux.

6. Procédé selon la revendication 5, **caractérisé en ce que** le résultat de la multiplication de Montgomery est additionné à un quotient auxiliaire $(a_1)$ et est réduit modulo le module (M), le quotient auxiliaire $(a_1)$ étant déterminé par division du dividende (a) réduit par la puissance de deux.

7. Procédé selon la revendication 6, **caractérisé en ce que**, si le résultat de l'addition modulaire ne présente pas la même parité que le dividende (a) réduit, le module (M) est additionné au résultat de l'addition modulaire.

8. Procédé selon une des revendications 1 à 7, **caractérisé en ce que** la multiplication de Montgomery reçoit (S2, S4) un facteur de compensation (m') en tant que deuxième valeur d'entrée si les valeurs d'entrée et de sortie de la multiplication de Montgomery sont limitées par une taille inférieure à la taille de la valeur R affectée à la multiplication de Montgomery.

**9.** Procédé dans un support de données portable (10), destiné à exécuter une opération cryptographique sur des données touchant à la sécurité, comprenant une étape de la détermination d'un quotient (q) d'une division d'un dividende (a) par un diviseur (b), **caractérisé par** les étapes effectuées par un dispositif de division (54) du support de données (10) :

- détermination d'un quotient auxiliaire ($q_1$) d'une division d'une valeur ($a_1$) dérivée du dividende (a) par le diviseur (b) au moyen d'un procédé selon une des revendications 1 à 8;
- détermination d'un dividende auxiliaire (a') par soustraction d'un produit d'une valeur (d) dérivée du quotient auxiliaire ($q_1$) et du diviseur (b), du dividende (a),
des multiplications de Montgomery à effectuer dans le cadre du procédé étant effectuées par un dispositif de multiplication (35) du support de données (10).

**10.** Procédé selon la revendication 9, **caractérisé en ce que** la valeur ($a_1$) dérivée du dividende (a) est constituée en tant que quotient du dividende (a) et d'une puissance de deux prédéterminée, et **en ce que** la valeur dérivée du quotient auxiliaire ($q_1$) est constituée en tant que produit du quotient auxiliaire ($q_1$) et de la puissance de deux prédéterminée.

**11.** Procédé selon une des revendications 9 ou 10, **caractérisé par** les étapes subséquentes:

- détermination d'un deuxième quotient auxiliaire ($q_2$) d'une division du dividende auxiliaire (a') par le diviseur (b) au moyen d'un procédé selon une des revendications 1 à 8;
- détermination du quotient (q) de la division du dividende (a) par le diviseur (b) par addition de la valeur (d) dérivée du quotient auxiliaire ($q_1$) et du deuxième quotient auxiliaire ($q_2$).

**12.** Procédé selon une des revendications 10 ou 11, **caractérisé en ce que** la taille du dividende (a) est limitée par la taille du carré de la puissance de deux et **en ce que** la taille du diviseur (b) est limitée par la taille de la puissance de deux.

**13.** Support de données portable (10), destiné à exécuter une opération cryptographique sur des données touchant à la sécurité, comprenant un processeur (30), une mémoire (40; 50; 60), un dispositif de multiplication (35) destiné à effectuer une multiplication de Montgomery ainsi qu'un dispositif de division (54) configuré pour, dans le cadre de l'opération cryptographique, déterminer un quotient (q) d'un dividende (a) par un diviseur (b), **caractérisé en ce que** le dispositif de division (54) est configuré pour déterminer le quotient (q), ce qui a lieu **en ce que** le dividende (a) est réduit de son reste (r) modulo le diviseur (b) et **en ce qu'**une multiplication de Montgomery relativement à un module (M) prédéterminé est effectuée au moyen d'un dispositif de multiplication (35), le dispositif de multiplication (35) étant configuré de manière à, pour effectuer la multiplication de Montgomery, recevoir en tant qu' une valeur d'entrée une valeur dérivée du dividende (a) réduit, le module (M) prédéterminé étant constitué en soustrayant le diviseur (b) d'une puissance de deux prédéterminée.

**14.** Support de données selon la revendication 13, **caractérisé en ce que** le dispositif de multiplication (35) est réalisé sous forme de coprocesseur (35).

**15.** Support de données selon la revendication 13 ou 14, **caractérisé en ce que** le dispositif de multiplication (35) est configuré pour effectuer une multiplication de Montgomery dont les valeurs d'entrée et de sortie se situent aux environs de -M à M-1 ou aux environs de 0 à 2*M-1 ou aux environs de 0 à R-1, M désignant la taille du module (M) relativement auquel la multiplication de Montgomery est effectuée, et R désignant la taille de la valeur R affectée au module (M) relativement à la multiplication de Montgomery.

**16.** Support de données selon une des revendications de 13 à 15, **caractérisé en ce que** le dispositif de division (54) est configuré pour effectuer un procédé selon une des revendications de 1 à 12.

# FIG 1

# FIG 2

Bestimme Modulus M:
$M:=2^b\text{-}b$ ~S1

Bestimme Ausgleichsfaktor c
$m':=2^{d-b} \bmod M$ ~S2

Reduziere Dividend um Rest
modulo Divisor:
$a:=a\text{-}r$ ~S3

$q:=0$ ~S4

Falls (a>M):
$q:=q+1$ und $a:=a\text{-}b$ ~S5

Bestimme Quotient mittels
Montgomery-Multiplikation:
$q:=q+MMult\ (a, m', M)$ ~S6

Ausgabe q ~S7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Modular Multiplication Without Trial Division'' von Peter L. Montgomery. *Mathematics of Computation,* April 1985, vol. 44 (170), 519-521